# EUROPÄISCHE PATENTANMELDUNG

(11) **EP 2 992 767 A1**
(43) Veröffentlichungstag der Anmeldung: **09.03.2016**
(21) Anmeldenummer: 15182785.4
(22) Anmeldetag: 27.08.2015
(51) Int. Cl.: A24C 5/00, C08L 97/02

(54) **VORRICHTUNG ZUR HERSTELLUNG UND/ODER VERARBEITUNG VON ARTIKELN DER TABAK VERARBEITENDEN INDUSTRIEN ODER DEREN BESTANDTEILEN**

(30) Priorität: 05.09.2014 DE 102014217763
(71) Anmelder: HAUNI Maschinenbau AG, 21033 Hamburg (DE)
(72) Erfinder: Müller, Thomas, 20259 Hamburg (DE); Diedrich, Daniel, 22527 Hamburg (DE)
(74) Vertreter: Eisenführ Speiser

(57) **Zusammenfassung**

Erfindungsgemäß ist mindestens eine Komponente einer Vorrichtung zur Herstellung und/oder Verarbeitung von Artikeln der Tabak verarbeitenden Industrie oder deren Bestandteilen zumindest abschnittsweise aus einem auf Lignin basierenden oder Lignin aufweisenden Werkstoff gefertigt. Somit besteht das Besondere der Erfindung in der Verwendung eines Werkstoffes zur Fertigung mindestens eines Abschnittes mindestens einer Komponente der zuvor erwähnten Vorrichtung, wobei der Werkstoff auf Lignin basiert oder Lignin aufweist.

## Beschreibung

Die Erfindung betrifft eine Vorrichtung zur Herstellung und/oder Verarbeitung von Artikeln der Tabak verarbeitenden Industrie oder deren Bestandteilen sowie die Verwendung eines Werkstoffes zur Fertigung mindestens eines Abschnittes mindestens einer Komponente einer derartigen Vorrichtung.

Zur Fertigung von Vorrichtungen der eingangs genannten Art werden neben Metallen und Metalllegierungen auch immer häufiger Kunststoffe als Werkstoff eingesetzt. Jedoch wird die Entsorgung von aus synthetischen Polymeren bestehenden Kunststoffen zunehmend schwieriger. Denn synthetische Polymere lassen sich nur über sehr lange Zeiträume abbauen, die in der Regel 100.000 Jahre oder länger betragen. Auch das Recycling ist insbesondere dann mit hohem Aufwand und dadurch erheblichen Kosten verbunden, wenn dabei besonders giftige Abfallstoffe entstehen und/oder unterschiedliche Kunststoffe getrennt werden müssen. Hieraus und aus der Notwendigkeit der Schonung der begrenzten Mineralöl-Ressourcen, aus denen die synthetischen Polymere hergestellt werden, entsteht auch in der Tabak verarbeitenden Industrie der Bedarf nach einer Substitution synthetischer Polymere durch alternative Werkstoffe. Erfindungsgemäß wird deshalb vorgeschlagen, mindestens eine Komponente einer Vorrichtung zur Herstellung und/oder Verarbeitung von Artikeln der Tabak verarbeitenden Industrie oder deren Bestandteilen zumindest abschnittsweise aus einem auf Lignin basierenden oder Lignin aufweisenden Werkstoff zu fertigen.

Lignin ist ein natürliches Polymer mit im Vergleich zu anderen Naturpolymeren deutlich besseren Werkstoffeigenschaften, zeichnet sich insbesondere durch eine vergleichsweise hohe Festigkeit oder Steifigkeit und Schlagzähigkeit aus und lässt sich auch zusammen mit den meisten anderen natürlichen oder auch synthetischen Stoffen problemlos zu einem gemeinsamen Werkstoff verarbeiten. Lignin fällt in großen Mengen als Nebenprodukt bei der Zellstoffgewinnung an und ist somit in großen Mengen verfügbar. Lignin ist ein hochmolekulares polyphenolisches Makromolekül, das in Sträuchern und Bäumen die Räume zwischen den Zellmembranen ausfüllt und zu Holz werden lässt. Aus diesem Grund weist Lignin auch eine günstige CO₂-Bilanz auf, was auch vorteilhaft für die Entsorgung und das Recycling ist, wobei eine Verbrennung CO₂-neutral stattfindet.

Erfindungsgemäß ist gefunden worden, dass sich auf Lignin basierende oder Lignin aufweisende Werkstoffe für die Fertigung von Vorrichtungen zur Herstellung und/oder Verarbeitung von Artikeln der Tabak verarbeitenden Industrie oder deren Bestandteilen gut eignen. Denn es hat sich herausgestellt, dass die Festigkeitseigenschaften von Lignin für die Fertigung von Vorrichtungen zur Herstellung und/oder Verarbeitung von Artikeln der Tabak verarbeitenden Industrie völlig ausreichend sind, während die Formgenauigkeit teilweise sogar herkömmliche Kunststoffe übertrifft. Gleichwohl lässt sich Lignin wie üblicher Kunststoff verarbeiten. Außerdem unterscheiden sich die Verbrennungsrückstände der erfindungsgemäß verwendeten Werkstoffe nicht von Pflanzenfasern, was ein weiterer Vorteil ist. Denn eventuell im Tabak verbleibende kleinere Bruchstücke von Komponenten der Vorrichtung wie beispielswise für die Aufnahme der Artikel vorgesehenen, bevorzugt als Mulden ausgebildeten, Aufnahmeelementen verfremden das Raucherlebnis im Wesentlichen nicht. Insbesondere größere Bruchstücke, die in den rückgeführten Schusstabak gelangen, werden wir beispielsweise Rippen im Verteiler gesichtet.

Bevorzugte Ausführungen und Weiterbildungen der Erfindung sind in den abhängigen Ansprüchen angegeben.

Bevorzugt findet die Fertigung unter Verwendung des auf Lignin basierenden oder Lignin aufweisenden Werkstoffes im Rapid-Prototype-Verfahren statt, welches insbesondere Formatanpassungen auf schnelle und preiswerte Weise möglich macht. Hierbei ist die Verwendung von Lasersinter-, Polyjet- und/oder Stereolithographie-Verfahren zusätzlich denkbar.

Alternativ ist aber auch die Fertigung unter Verwendung von auf Lignin basierenden oder Lignin aufweisenden Werkstoffen auf handelsüblichen Spritzgussmaschinen denkbar.

Bevorzugt liegen die verwendeten, auf Lignin basierenden oder Lignin aufweisenden Werkstoffe im Ausgangszustand als Granulat vor, was die Fertigung insbesondere im Spritzgussverfahren vereinfacht.

Aufgrund seiner natürlichen Herkunft eignen sich auf Lignin basierende oder Lignin aufweisende Werkstoffe insbesondere zur Fertigung mindestens desjenigen Abschnittes mindestens einer Komponente der Vorrichtung, mit dem die Artikel oder deren Bestandteile in Berührung gelangen, was auch unter hygienischen Gesichtspunkten sowie vor dem Hintergrund der im Hinblick auf einschlägigen Vorschriften zur Lebensmittelverträglichkeit von Werkstoffen von Vorteil ist. Bei einer derartigen Komponente kann es sich beispielsweise um die Oberfläche oder Außenseite eines bewegbaren Körpers, insbesondere einer Trommel, einer Fördervorrichtung und/oder ein daran anbringbares, bevorzugt als Muldenelement ausgebildetes Aufnahmeelement zur Aufnahme mindestens eines Artikels und/oder ein, vorzugsweise schienenförmiges, Führungselement zur Führung des Artikels und/oder ein, insbesondere als Schuh einer Spinne ausgebildetes, Übergabemittel zur Übergabe der Artikel, insbesondere zwischen zwei Stationen, handeln.

Bevorzugt kann Tabak selbst als Ausgangsmaterial oder zumindest als ein Ausgangsmaterial für den auf Lignin basierenden oder Lignin aufweisenden Werkstoff verwendet werden.

## Patentansprüche

1. Vorrichtung zur Herstellung und/oder Verarbeitung von Artikeln der Tabak verarbeitenden Industrie oder deren Bestandteilen,
**dadurch gekennzeichnet, dass** mindestens eine Komponente zumindest abschnittsweise aus einem auf Lignin basierenden oder Lignin aufweisenden Werkstoff besteht.

2. Vorrichtung nach Anspruch 1, **dadurch gekennzeichnet, dass** mindestens eine Komponente aus dem auf Lignin basierenden oder Lignin aufweisenden Werkstoff unter Anwendung eines Rapid-Prototype-Verfahrens hergestellt ist.

3. Vorrichtung nach Anspruch 1 oder 2, **dadurch gekennzeichnet, dass** mindestens eine Komponente zumindest abschnittsweise aus einem auf Lignin basierenden oder Lignin aufweisenden granulatförmigen Werkstoff hergestellt ist.

4. Vorrichtung nach mindestens einem der vorangegangenen Ansprüche, **dadurch gekennzeichnet, dass** mindestens derjenige Abschnitt mindestens einer Komponente, mit dem die Artikel der Tabak verarbeitenden Industrie oder deren Bestandteile in Berührung gelangen, aus dem auf Lignin basierenden oder Lignin aufweisenden Werkstoff besteht.

5. Vorrichtung nach Anspruch 4, **dadurch gekennzeichnet, dass** die mindestens eine Komponente die Oberfläche oder Außenseite eines bewegbaren Körpers, insbesondere einer Trommel, einer Fördervorrichtung und/oder ein am bewegbaren Körper anbringbares, bevorzugt als Wechselmulde ausgebildetes, Aufnahmeelement zur Aufnahme mindestens eines Artikels und/oder ein, vorzugsweise schienenförmiges Führungselement, zur Führung des Artikels und/oder ein, bevorzugt als Schuh einer Spinne ausgebildetes, Übergabemittel zur Übergabe der Artikel, insbesondere zwischen zwei Stationen, ist.

6. Vorrichtung nach mindestens einem der vorangegangenen Ansprüche, **dadurch gekennzeichnet, dass** mindestens eine Komponente zumindest abschnittsweise aus einem auf Lignin basierenden oder Lignin aufweisenden Werkstoff mit Tabak als ein Ausgangsmaterial besteht.

7. Verwendung eines Werkstoffes zur Fertigung mindestens eines Abschnittes mindestens einer Komponente einer Vorrichtung zur Herstellung und/oder Verarbeitung von Artikeln der Tabak verarbeitenden Industrie oder deren Bestandteilen, **dadurch gekennzeichnet, dass** der Werkstoff auf Lignin basiert oder Lignin aufweist.

8. Verwendung nach Anspruch 7, **dadurch gekennzeichnet, dass** der Werkstoff unter Anwendung eines Rapid-Prototype-Verfahrens zur Fertigung mindestens eines Abschnittes mindestens einer Komponente der Vorrichtung zur Herstellung und/oder Verarbeitung von Artikeln der Tabak verarbeitenden Industrie oder deren Bestandteilen verwendet wird.

9. Verwendung nach Anspruch 7 oder 8, **dadurch gekennzeichnet, dass** der Werkstoff als Granulat vorliegt.

10. Verwendung nach mindestens einem der Ansprüche 7 bis 9, **dadurch gekennzeichnet, dass** der Werkstoff zur Fertigung mindestens desjenigen Abschnittes mindestens einer Komponente verwendet wird, mit dem die Artikel der Tabak verarbeitenden Industrie oder deren Bestandteile in Berührung gelangen.

11. Verwendung nach Anspruch 10, **dadurch gekennzeichnet, dass** die mindestens eine Komponente die Oberfläche oder Außenseite eines bewegbaren Körpers, insbesondere einer Trommel, einer Fördervorrichtung und/oder ein am bewegbaren Körper anbringbares, bevorzugt als Wechselmulde ausgebildetes, Aufnahmeelement zur Aufnahme mindestens eines Artikels und/oder ein, vorzugsweise schienenförmiges Führungselement, zur Führung des Artikels und/oder ein, bevorzugt als Schuh einer Spinne ausgebildetes, Übergabemittel zur Übergabe der Artikel, insbesondere zwischen zwei Stationen, ist.

12. Verwendung nach mindestens einem der Ansprüche 7 bis 11, **dadurch gekennzeichnet, dass** Tabak als ein Ausgangsmaterial für den auf Lignin basierenden oder Lignin aufweisenden Werkstoff verwendet wird.
